# FASCICULE DE BREVET EUROPEEN

(11) **EP 1 299 669 B1**
(45) Date de publication et mention de la délivrance du brevet: **27.10.2004**
(21) Numéro de dépôt: 01940672.7
(22) Date de dépôt: 01.06.2001
(51) Int. Cl.: F16L 11/08, F16L 11/16

(54) **CONDUITE FLEXIBLE A ARMURES EN FEUILLARD**
BIEGSAME ROHRLEITUNG MIT BANDFÖRMIGEN VERSTÄRKUNGEN
FLEXIBLE CONDUIT WITH FLEXIBLE STRIP REINFORCEMENT

(30) Priorité: 30.06.2000 FR 0008484
(43) Date de publication de la demande: 09.04.2003
(73) Titulaire: TECHNIP FRANCE, 92400 Courbevoie (FR)
(72) Inventeur: COUTAREL, Alain, F-76130 Mont-Saint-Aignan (FR); DUPOIRON, François, F-76360 Barentin (FR); ESPINASSE, Philippe, François, F-76420 Bihorel (FR)
(74) Mandataire: Bertrand, Didier
(86) Numéro de dépôt international: PCT/FR2001/001712
(87) Numéro de publication internationale: WO 2002/001104

(56) Documents cités:
- EP-A- 0 166 385
- WO-A-90/14543
- FR-A- 2 664 019

## Description

La présente invention concerne une conduite flexible pour véhiculer sur de grandes distances un fluide sous pression et le cas échéant sous haute température, tel qu'un gaz, du pétrole, de l'eau ou d'autres fluides. L'invention vise tout particulièrement une conduite destinée à une exploitation pétrolière en mer. Elle vise notamment : d'une part les conduites de fond, dites "flow-lines", c'est-à-dire des conduites flexibles déroulées à partir d'un bateau pour être posées généralement sur le fond de la mer et connectées aux installations sous-marines, de telles conduites travaillant principalement en statique ; d'autre part, les colonnes montantes, dites "risers", c'est-à-dire des conduites flexibles reliant une installation de surface telle qu'une plate-forme aux installations disposées sur le fond marin et dont la majeure partie ne repose pas sur le fond marin, de telles conduites travaillant essentiellement en dynamique.

Les conduites flexibles utilisées en mer doivent pouvoir résister à des pressions internes et/ou à des pressions externes fortes et supporter également des flexions longitudinales, des torsions ou des tractions sans risque de rupture.

Elles présentent des configurations variées en fonction de leur utilisation précise mais répondent en général aux critères constructifs définis notamment dans les normes API 17 B et API 17 J établies par l'American Petroleum Institute sous l'intitulé "Recommended Practice for Flexible Pipe" and "Specification for Unbonded Flexible Pipe". On pourra aussi se reporter aux documents FR 2 654 795 A, WO 98 / 25 063 A, FR 2 727 738 A, FR 2 744 511 A.

Une conduite flexible comprend généralement de l'intérieur vers l'extérieur :
- un ensemble structurel résistant aux efforts radiaux composé d'une gaine d'étanchéité réalisée en matière plastique, généralement polymère, résistant plus ou moins à l'action chimique du fluide à transporter, et d'un enroulement en hélice à pas court d'un élément métallique ;
- au moins une nappe (et généralement au moins deux nappes croisées) d'armures de traction enroulées à pas long, c'est-à-dire dont l'angle d'armage mesuré sur l'axe longitudinal de la conduite est inférieur à 60° ; et
- une gaine de protection et d'étanchéité externe en polymère.

Dans les conduites à passage lisse, dites "smooth bore", ledit ensemble structurel est constitué par :
- ladite gaine d'étanchéité interne ;
- une voûte de pression résistant principalement à la pression développée par le fluide dans la gaine d'étanchéité et à la pression externe et constituée par l'enroulement en hélice à pas court (c'est-à-dire avec un angle d'enroulement voisin de 90°) autour de la gaine interne, d'un ou plusieurs fils métalliques de forme agrafés (auto-agrafables ou non) ; les fils de formes ont une section en Z ou en T ou leurs dérivés (teta ou zeta), en U, ou plus avantageusement en I (cf. document WO 00/09899) ;

Dans une conduite à passage non-lisse, dite "rough bore", on prévoit en outre à l'intérieur de la gaine d'étanchéité interne une carcasse constituée d'un feuillard agrafé qui sert à empêcher l'écrasement (en anglais "collapse") de la conduite sous l'effet d'une pression externe s'exerçant sur ladite gaine. Une voûte de pression peut également être utilisée pour participer aussi à la résistance à l'écrasement.

Jusqu'à présent, les armures de traction ont été réalisées en fils de forme tréfilés, qui pour des raisons de production sont limités à des rapports de largeur à hauteur (L/H) inférieurs à 4 ce qui entraîne un nombre important de fils, de l'ordre de 40, dans chaque nappe d'armures, même si ces fils sont improprement appelés "flat métal strips" comme dans le document EP 0166385 A. Ces fils sont obtenus à partir de l'acier obtenu en aciérie par trois transformations en usine, sous forme de blooms d'abord, puis après laminage sous forme de couronnes de fil brut, puis après traitement thermique éventuel et tréfilage et/ou laminage sous forme de couronnes de fil fini. On utilise pour les armures souvent des fils de section rectangulaire non agrafés, mais on a déjà proposé, dans le document FR 2 664 019, d'utiliser pour la première nappe de fils d'armure, des fils agrafables, soit seuls (auto-agrafables) soit à l'aide d'un fil d'agrafage auxiliaire. Dans le document FR 2 182 372, il est préconisé de réaliser des nappes d'armures agrafées avec un fil de forme en Z. Les fils de forme présentent de bonnes qualités mécaniques (résistance mécanique Rm de l'ordre de 800 à 1400 MPa) mais sont relativement onéreux surtout lorsque le fil est relativement large et/ou de forme complexe. De plus, leur mise en oeuvre par spiralage est d'autant plus difficile qu'ils sont larges et épais, ou bien qu'ils comportent un relief ; il faut alors généralement un formage préalable qui grève le coût de fabrication.

Le but de l'invention est de proposer une conduite flexible qui ne présente pas ces inconvénients tout en offrant des performances comparables.

L'invention atteint son but grâce à une conduite flexible comprenant de l'intérieur vers l'extérieur, d'une part un ensemble structurel résistant aux efforts radiaux composé d'une gaine d'étanchéité et au moins d'un enroulement en hélice à pas court d'un ou plusieurs éléments métalliques, d'autre part au moins une nappe d'armures de traction enroulées à pas long et une gaine de protection et d'étanchéité externe en polymère, caractérisée en ce qu'au moins une nappe d'armure est réalisée en feuillard d'acier.

Par feuillard d'acier, on entend un produit issu des aciéries après au moins deux transformations en usine, à savoir la mise sous forme de tôles enroulées puis le laminage et le refendage desdites tôles pour obtenir le feuillard, c'est-à-dire une bande d'acier de faible épaisseur (inférieure à environ 8 mm), qui, à l'état non plié est généralement caractérisé par un rapport L/e très important.

Les feuillards ont un coût plus faible que les fils de forme, par exemple deux à quatre fois moins cher en fonction de la complexité du fil. Ils ont une résistance mécanique Rm de l'ordre de 600 à 900 MPa généralement plus faible que les fils de forme, mais ils se prêtent très bien à une mise en forme (par pliage ou profilage) augmentant leur inertie et favorisant un agrafage (auto-agrafage ou non), comme on le sait quand on les utilise pour constituer la carcasse de la conduite. D'autre part, la liberté de choix des mises en forme possibles des feuillards permet de sélectionner des formes qui n'entravent pas la flexibilité de manière importante. L'utilisation de feuillards conformément à l'invention permet d'économiser jusqu'à 30% du prix de fabrication des armures.

L'invention permet notamment de réaliser plusieurs nappes d'armures agrafées et même toutes les nappes d'armures agrafées, ce qui est difficilement envisageable avec des fils de forme agrafables ou auto-agrafables pour des questions de coût et de difficulté de mise en oeuvre. Les feuillards agrafés sont prévus pour laisser entre eux un jeu de manière à conserver la flexibilité de la conduite ; l'agrafage des armures permet de contrôler ce jeu dans toutes les conditions d'utilisation et donc de s'opposer aux phénomènes de destruction des armures tels que le flambement sous pression externe. De plus, grâce à sa largeur, l'armure feuillard apporte une résistance accrue à ces modes de dégradation.

L'épaisseur du feuillard est de préférence supérieure à environ 2 mm pour éviter les problèmes de corrosion généralisée. L'épaisseur e retenue pour le feuillard et la hauteur H du profil formé par pliage dépendent de l'inertie de l'armure nécessaire pour résister aux conditions d'utilisation de la conduite et notamment de la pression externe. La largeur L' de l'armure feuillard dépend essentiellement de la flexibilité de la conduite flexible à réaliser ; pour maintenir une bonne flexibilité, il est opportun de conserver au moins dix armures, et de préférence vingt, sur la périphérie de manière à avoir au moins dix jeux qui confèrent ladite flexibilité. De préférence, on utilisera une armure feuillard dont le rapport L'/H est compris entre 3 et 20, et de préférence supérieur à 4, ce qui permet de diminuer le nombre d'armures dans chaque nappe. La largeur L' est la largeur du feuillard plié pour constituer une armure de la nappe par opposition à la largeur L qui est celle de la bande, L'et H étant égaux à L et e lorsque l'armure est plate.

La résistance à la traction dépend de l'acier utilisé, mais on choisit des aciers permettant d'avoir des feuillards à hautes caractéristiques mécaniques et présentant des allongements suffisants supérieurs à 15% et de préférence supérieurs à 25%.

En fonction des applications visées, il est possible d'utiliser des nappes d'armures de feuillard en combinaison avec au moins une nappe traditionnelle en fil de forme, par exemple une nappe en T agrafé telle que connue par le document précité FR 2 664 019.

Dans une forme de réalisation avantageuse, le feuillard est profilé en T ou W avec un pli central et des ailes d'agrafage. Le pli central peut être bas ou haut en fonction de l'inertie désirée. Les ailes permettent l'agrafage avec un fil de même nature enroulé à l'envers ou avec un feuillard d'agrafage en U ou C plat.

Dans une autre forme de réalisation, le feuillard est en U plat avec des ailes d'agrafage, simples ou recourbées intérieurement.

Quelle que soit la forme du feuillard, il est à noter que le préformage, lorsqu'il est nécessaire, est plus facile à réaliser qu'avec un fil de forme.

D'autres avantages et caractéristiques seront mis en évidence à la lecture de la description qui suit, en référence aux dessins schématiques annexés représentant à titre d'exemple plusieurs formes de réalisation de conduite flexible selon l'invention. Sur ces dessins :
La figure 1 est une vue en perspective d'une conduite de type "rough bore" à laquelle est appliquée l'invention ;
Les figures 2 à 8 représentent sept variantes de profils de feuillard d'armure utilisables pour la conduite de la figure 1.

La conduite 1 d'axe 2 comprend de l'intérieur vers l'extérieur une carcasse 3 en feuillard agrafé, une gaine d'étanchéité interne polymérique 4, une voûte métallique 5 constituée par l'enroulement en hélice à pas court d'au moins un fil métallique de forme (ici en zeta auto-agrafé), un ensemble résistant à la traction axiale dans le sens longitudinal de la conduite et constitué d'une paire de nappes d'armures croisées 7, 8 d'enroulement à pas long en sens contraire, et une gaine d'étanchéité externe polymérique 9. D'autres couches non représentées peuvent être prévues, selon le type et la destination de la conduite, comme par exemple une couche de frette constituée par un enroulement à pas court de fil rectangulaire au-dessus de la voûte de pression, d'autres paires de nappes d'armures, et des gaines et/ou des rubanages intermédiaires disposés entre ces diverses couches.

Selon l'invention, les nappes d'armure 7 et 8 sont réalisées en un feuillard 10 représenté ici sous forme d'un feuillard plat, mais plus avantageusement plié ou préformé de manière à former un feuillard agrafable.

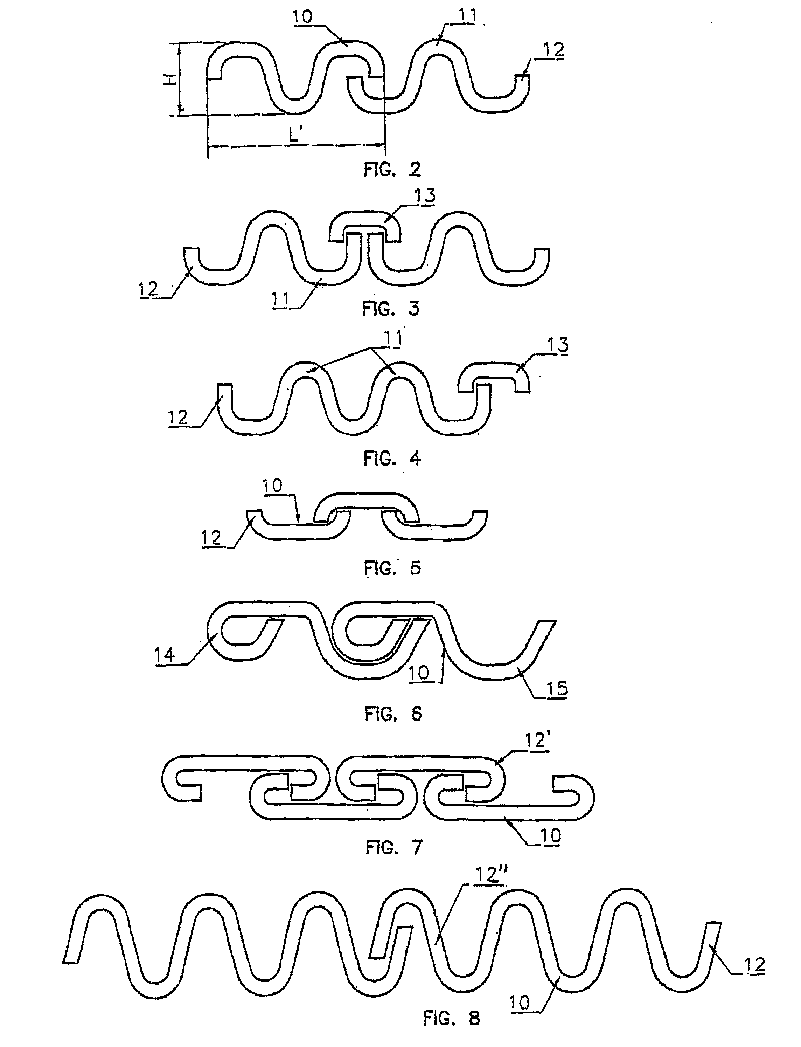

Les figures 2 à 8 illustrent diverses formes agrafables de feuillard 10.

Dans la figure 2, le feuillard 10 est un feuillard en T ou W plat comportant un pli central 11 et deux ailes relevées 12, permettant un agrafage avec un feuillard identique enroulé à l'envers. La hauteur des ailes 12 est sensiblement égale ou inférieure à la moitié de la hauteur du pli 11.

Dans la figure 3, le feuillard 10 est également en T ou W, l'agrafage étant réalisé par un feuillard d'agrafe en U plat 13. Le feuillard de la figure 4 est analogue à celui de la figure 3, avec deux plis intermédiaires 11' au lieu d'un seul pli central 11.

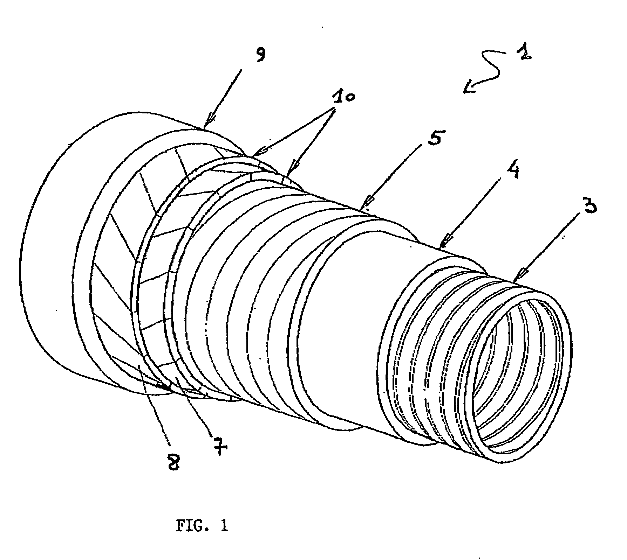

Dans la figure 5, le feuillard 10 est en forme de U plat dont les ailes 12 permettent un agrafage avec un feuillard identique enroulé à l'envers comme dans la figure 1.

Dans la figure 6, le feuillard 10 est en S avec deux parties de boucles 14 et 15 qui peuvent s'emboîter l'une dans l'autre pour réaliser un auto-agrafage.

Dans la figure 7, l'armure en feuillard 10 est en forme de C plat dont les ailes 12' sont recourbées vers l'intérieur, de manière à réduire le jeu entre les feuillard agrafés, ce qui permet de limiter un fluage d'une gaine polymérique qui serait en contact sur lesdits feuillards, notamment lorsque le profil est très large.

Dans la figure 8, le profil 10 est ondulé et se termine par des ailes 12, 12" disposées en sens opposé de manière à permettre un auto-agrafage.

11 est à noter que les ondulations ou les déjoints des armures en feuillard peuvent être comblés pour limiter le fluage de la gaine plastique en contact avec les armures par un bourrage plastique tel qu'un jonc, par de l'isolation thermique si l'on souhaite améliorer l'isolation ou par des fils machines pour ajouter du poids. Ces ondulations peuvent être aussi utilisées pour transporter des conducteurs secondaires tels qu'une fibre optique si l'on veut transporter un signal ou un câble électrique pour alimenter une installation sous marine ou pour du chauffage actif par effet Joule. Les formes des ondulations seront adaptées au conducteur disposé dans ces ondulations.

## Revendications

1. Conduite tubulaire flexible comprenant au moins, de l'intérieur vers l'extérieur : un ensemble structurel étanche résistant aux efforts radiaux composé d'une gaine d'étanchéité interne (4) et d'un enroulement (5) en hélice à pas court d'un élément métallique ; au moins une nappe (7, 8) d'armures de traction enroulées à pas long et une gaine de protection et d'étanchéité externe (9), **caractérisée en ce qu'**au moins une nappe (7, 8) d'armures est réalisée en feuillard d'acier (10) mis en forme par pliage ou préformage.

2. Conduite selon la revendication 1, **caractérisée en ce que** ledit feuillard (10) a une épaisseur comprise entre environ 2 mm et 8 mm.

3. Conduite selon l'une quelconque des revendications 1 ou 2, **caractérisée en ce que** le feuillard a un rapport de la largeur à la hauteur L/H compris entre 3 et 10 et de préférence supérieur à 4.

4. Conduite selon l'une quelconque des revendications 1 à 3, **caractérisée en ce que** le feuillard (10) d'au moins une nappe (7, 8) est agrafé.

5. Conduite selon la revendication 4, **caractérisée en ce que** le feuillard (10) de toutes les nappes d'armures (7, 8) est agrafé.

6. Conduite selon l'une quelconque des revendications 1 à 5, **caractérisée en ce qu'**il y a au moins dix feuillards (10) par nappe d'armure.

7. Conduite selon l'une quelconque des revendications 1 à 6, **caractérisée en ce que** le feuillard (10) est plié en W avec un pli central (11) et des ailes (12) d'agrafage.

8. Conduite selon l'une quelconque des revendications 1 à 6, **caractérisée en ce que** le feuillard (10) est en U plat avec des ailes d'agrafage (12).

## Patentansprüche

1. Flexible Rohrleitung mit - von innen nach außen - mindestens einer gegenüber radialen Belastungen widerstandsfähigen, strukturellen, dichten Anordnung, bestehend aus einem inneren Dichtungsmantel (4) und einem mit kleiner Ganghöhe gewickelten Metallelement (5); mindestens einer Schicht (7,8) aus Zugverstärkungen, die mit großer Ganghöhe gewickelt sind, und einem äußeren Schutz- und Dichtungsmantel (9),
**dadurch gekennzeichnet, daß** mindestens eine Verstärkungsschicht (7,8) aus einem Stahlband (10) hergestellt ist, das durch Falten oder Vorformung geformt ist.

2. Leitung nach Anspruch 1, **dadurch gekennzeichnet, daß** das Band (10) eine Dicke zwischen ungefähr 2 mm und 8 mm hat.

3. Leitung nach einem der Ansprüche 1 oder 2, **dadurch gekennzeichnet, daß** das Band ein Verhältnis Breite zu Höhe L/H zwischen 3 und 10 und vorzugsweise von mehr als 4 hat.

4. Leitung nach einem der Ansprüche 1 bis 3, **dadurch gekennzeichnet, daß** das Band (10) mindestens einer Schicht (7,8) geklammert ist.

5. Leitung nach Anspruch 4, **dadurch gekennzeichnet, daß** das Band (10) aller Verstärkungsschichten (7,8) geklammert ist.

6. Leitung nach einem der Ansprüche 1 bis 5, **dadurch gekennzeichnet, daß** es mindestens zehn Bänder (10) pro Verstärkungsschicht gibt.

7. Leitung nach einem der Ansprüche 1 bis 6, **dadurch gekennzeichnet, daß** das Band (10) in ein W gefaltet ist, mit einer zentralen Falte (11) und Klammerflügeln (12).

8. Leitung nach einem der Ansprüche 1 bis 6, **dadurch gekennzeichnet, daß** das Band (10) ein flaches U mit Klammerflügeln (12) ist.

## Claims

1. A flexible pipe comprising at least, from the inside outward: an impermeable structural assembly that withstands the radial forces, composed of an inner sealing sheath (4) and at least one winding (5) of a metal element, wound in a helix with a short pitch; at least one ply (7, 8) of tensile armor tendons wound with a long pitch, and an external protective sealing sheath (9), **characterized in that** at least one armor ply (7, 8) is made of a steel strip (10) formed by folding or preshaping.

2. The pipe as claimed in claim 1, **characterized in that** said strip (10) has a thickness of between about 2 mm and 8 mm.

3. The pipe as claimed in either of claims 1 and 2, **characterized in that** the armor tendon made of strip has a width-to-height ratio L'/H of between 3 and 20 and preferably greater than 4.

4. The pipe as claimed in any one of claims 1 to 3, **characterized in that** the strip (10) of at least one ply (7, 8) is interlocked.

5. The pipe as claimed in claim 4, **characterized in that** the strip (10) of all the armor plies (7, 8) is interlocked.

6. The pipe as claimed in any one of claims 1 to 5, **characterized in that** there are at least ten strips (10) per armor ply.

7. The pipe as claimed in any one of claims 1 to 6, **characterized in that** the strip (10) is bent in the form of a T or W with a central bend (11) and interlocking flanges (12).

8. The pipe as claimed in any one of claims 1 to 6, **characterized in that** the strip (10) is in the form of a flat U or C with interlocking flanges (12).
